# EUROPÄISCHE PATENTSCHRIFT

(11) **EP 1 096 156 B1**
(45) Veröffentlichungstag und Bekanntmachung des Hinweises auf die Patenterteilung: **04.05.2005**
(21) Anmeldenummer: 00122288.4
(22) Anmeldetag: 20.10.2000
(51) Int. Cl.: F16B 5/02

(54) **Vormontierte Befestigungsschraube**
Preassembled securing screw
Système de fixation à vis pré-montée

(30) Priorität: 27.10.1999 DE 19951652
(43) Veröffentlichungstag der Anmeldung: 02.05.2001
(73) Patentinhaber: Volkswagen Aktiengesellschaft, 38436 Wolfsburg (DE)
(72) Erfinder: Ostrowski, Wolfgang, 38446 Wolfsburg (DE)

(56) Entgegenhaltungen:
- DE-A- 19 534 034
- US-A- 5 094 579
- US-A- 5 871 319

## Beschreibung

Die Erfindung betrifft eine vormontierte Befestigungsschraube gemäß dem Oberbegriff des Anspruchs 1.

Eine Schraube ist aus EP 0 751 305 bekannt. Die Befestigungsschraube nach diesem Stand der Technik umfaßt einen Bolzen, der durch ein Loch in dem Blech einer Fahrzeugkarosserie ragt, wobei dazwischen eine Dämpfungsmuffe aus elastisch deformierbarem Material angeordnet ist, das in fixierter Position der Schraube zwischen einer kreisringförmigen Stützfläche, die mit der Schraube zusammenhängt, und einer gegenüberliegenden Fläche des Bleches axial zusammengedrückt wird. Die Schraube ist derartig aufgebaut, daß eine Buchse axial zwischen der kreisförmigen Stützfläche und der gegenüberliegenden Blechfläche angeordnet ist. Vor der Befestigung eines Elements werden die Dämpfungsmuffe und die Buchse axial in Bezug auf den Bolzen der Schraube so gehalten, daß sie eine unverlierbare Einheit von Komponenten bilden.

Eine weitere schwingungsdämpfende Befestigung ist aus DE 44 21 878 bekannt. Bei der schwingungsdämpfenden Befestigung wird die Montageschraube vormontiert mittels eines Verlierschutzes an dem betreffenden Schwingungsdämpfungselement in Montageposition gehalten. Die Öffnung des Schwingungsdämpfungselements ist durch eine an dem Schwingungsdämpfungselement befestigte elastomere Membran geschlossen, wobei die Membran eine zentrale Lochung mit einem kleineren lichten Maß als der Gewindedurchmesser der Montageschraube aufweist, so daß die Montageschraube durch die elastische Verspannung des Randes der zentralen Lochung auf dem Gewindeschaft verliersicher an dem Schwingungsdämpfungselement gehalten ist.

Ein Nachteil bei dem Stand der Technik ist jedoch, daß die Schraube und die Dämpfungsmuffe bzw. die Buchse zueinander verrutschen können. Das macht die Anwendung der Befestigungsschraube nach dem Stand der Technik insbesondere dann schwierig, wenn z.B. die Schraube von unten montiert werden muß und dabei die Dämpfungsmuffe und die Buchse gegen die Schwerkraft in der Nähe des vorderen Endes der Schraube gehalten werden muß.

Des Weiteren ist aus der US-A-5 871 319 ein Montageelement mit einem Schraubenbolzen bekannt, der einen oberen gewindefreien Bolzenabschnitt und einen unteren Bolzenabschnitt mit Gewinde, einen zwischen diesen ausgebildeten Halterungsflansch (Kragen) und einen Kopf , der den oberen Bolzenabschnitt abschließt, aufweist. Dieser Schraubenbolzen ist mit einer Montagemuffe versehen, die in Abhängigkeit vom Montagezustand des Montageelementes am Kopf oder am Kragen abgestützt ist und die mit einer Dämpfungsmuffe aus einem elastisch deformierbaren Material zur Aufnahme eines elastisch zu befestigenden Gegenstandes an einer Befestigungsfläche in Eingriff steht. Der Schraubenbolzen, die Montagemuffe und die Dämpfungsmuffe bilden dabei eine unverlierbare Einheit, bei der der untere Bolzenabschnitt ganz von der Dämpfungsmuffe bedeckt wird. Dieses Montageelement ist relativ aufwendig.

Aufgabe der vorliegenden Erfindung ist es, eine Befestigungsschraube anzugeben, wobei ein Bolzen unverlierbar mit einem Entkopplungselement verbunden ist, welche Befestigungsschraube einfach im Aufbau und bei der Montage einfach zu handhaben ist.

Diese Aufgabe wird erfindungsgemäß gelöst durch eine Befestigungsschraube mit den Merkmalen nach Anspruch 1. Bevorzugte Ausführungsformen der Erfindung sind Gegenstand der Unteransprüche.

In der Praxis wird die Befestigungsschraube in der Position durch Anformungen in der Dämpfungsmuffe gehalten, die entsprechende Aussparungen aufweist. In einer ersten Ausführungsform der Erfindung ist der Durchmesser des oberen Bolzenabschnitts kleiner als der Nenndurchmesser des Gewindes. Der Bolzen umfaßt einen Kragen zwischen den Bolzenabschnitten, dessen Durchmesser größer als der Durchmesser des oberen und des unteren Bolzenabschnitts ist. Die Dämpfungsmuffe umfaßt einen oberen Dämpfungsmuffenabschnitt und einen unteren Dämpfungsmuffenabschnitt. Der Durchmesser des Kragens ist größer als der Durchmesser der Bohrung des oberen Dämpfungsmuffenabschnitts sowie kleiner als der Durchmesser der Bohrung des unteren Dämpfungsmuffenabschnitts.

In einer zweiten Ausführungsform ist der Durchmesser des oberen Bolzenabschnitts nicht kleiner als der Nenndurchmesser des Gewindes. Ein Kragen ist zwischen den Bolzenabschnitten vorgesehen, dessen Durchmesser größer als der Durchmesser des oberen Bolzenabschnitts und größer als der Nenndurchmesser des Gewindes ist. Die Dämpfungsmuffe umfaßt einen unteren, einen mittleren und einen oberen dämpfungsmuffenabschnitt, wobei der Durchmesser des Kragens größer als der Durchmesser eines oberen Dämpfungsmuffenabschnitts, im wesentlichen gleich groß wie der Durchmesser der Bohrung eines mittleren Dämpfungsmuffenabschnitts und größer als der Durchmesser der Bohrung eines unteren Dämpfungsmuffenabschnitts ist. Vorzugsweise ist in dieser Ausführungsform der Kragen am direkt Übergang zwischen dem oberen Bolzenabschnitt und dem unteren Bolzenabschnitt angeordnet.

Bei dieser Ausführungsform mit drei Dämpfungsmuffenabschnitten ist die Dämpfungsmuffe vorzugsweise aus den drei Dämpfungsmuffenabschnitten mit einer kleinen, einer großen und einer kleinen Bohrung zusammengesetzt, die derart angeordnet sind, daß ihre Bohrungen konzentrisch übereinander liegen und sich die kleine Bohrung über der großen über der kleinen Bohrung befindet. Dabei können die Dämpfungsmuffenabschnitte miteinander verklebt oder vulkanisiert sein.

Um die Auflagefläche der Dämpfungsmuffe so groß zu machen, daß die Muffe nicht unsymmetrisch zusammengepreßt wird, umfaßt der Kopf vorzugsweise eine Unterlegscheibe, die fest mit ihm verbunden ist oder beweglich ist.

Zur weiteren Stabilisierung der Dämpfungsmuffe ist insbesondere in dem unteren Dämpfungsmuffenabschnitt eine Hülse angeordnet, deren Innendurchmesser größer als der Nenndurchmesser des Gewindes ist.

Die Erfindung findet insbesondere Anwendung bei der Montage von Wischern. Dort erleichtert ihre Verwendung die Montage erheblich.

Weitere Merkmale und Vorteile der Erfindung ergeben sich aus der folgenden Beschreibung eines Ausführungsbeispiels, wobei Bezug genommen wird auf die beigefügten Zeichnungen.
- Fig. 1: zeigt eine erste Ausführungsform der erfindungsgemäßen Befestigungsschraube in einem vormontierten Zustand im Querschnitt.
- Fig.2: zeigt eine weitere Ausführungsform der erfindungsgemäßen Befestigungsschraube in einem vormontierten Zustand im Querschnitt.
- Fig. 3: zeigt die Ausführungsform der erfindungsgemäßen Befestigungsschraube nach Fig. 2 in einem montierten Zustand im Querschnitt.

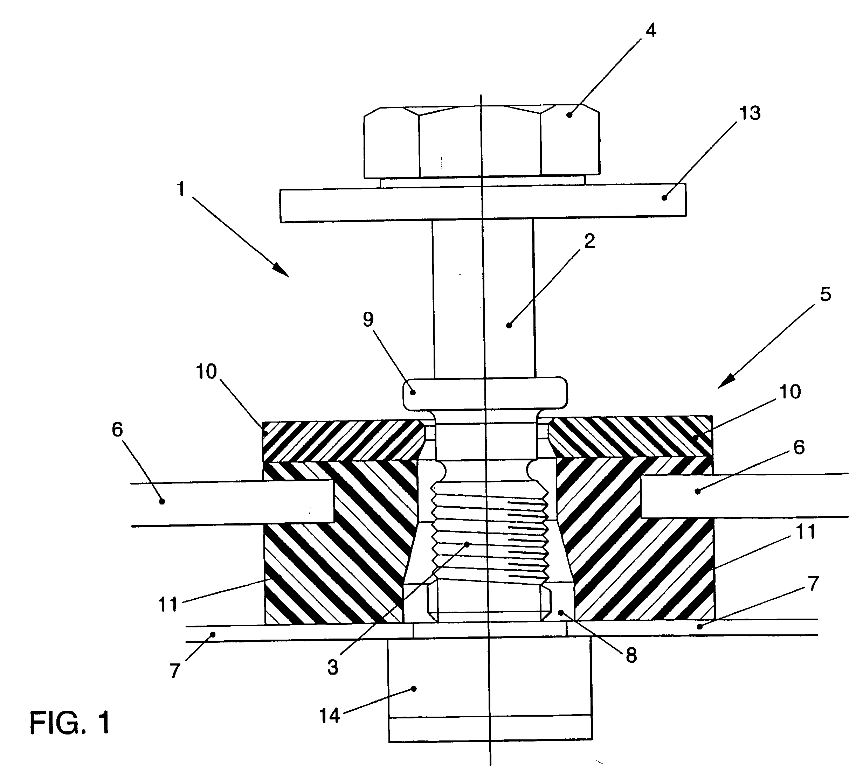

In Fig. 1 ist eine erste Ausführungsform der erfindungsgemäßen Befestigungsschraube in einer vormontierten Position gezeigt, in der die Befestigungsschraube noch nicht mit einem Gewindeloch 14 verschraubt ist. Die Befestigungsschraube umfaßt einen Bolzen 1, der einen oberen Bolzenabschnitt 2 ohne Gewinde und einen unteren Bolzenabschnitt 3 mit Gewinde aufweist. Der Bolzen 1 wird oben, d.h. an dem äußeren Ende des oberen Bolzenabschnitts 2 von einem Kopf 4 abgeschlossen. Der Durchmesser des Kopfes ist größer als der Durchmesser des oberen Bolzenabschnitts 2. In montierter Position der Befestigungsschraube wird eine Dämpfungsmuffe 5 aus elastisch deformierbarem Material gegen den Kopf 4 der Befestigungsschraube gedrückt. Die Dämpfungsmuffe dient zur Aufnahme eines elastisch zu befestigenden Gegenstandes 6 an einer Befestigungsfläche 7. Der zu befestigende Gegenstand 6 ist in den Figuren als zwei relativ flache Rechtecke dargestellt, wie z.B. ein Blech im Querschnitt. Die Erfindung ist aber nicht darauf beschränkt, es können Gegenstände mit unterlchiedlicher Struktur und Aufbau an der Dämpfungsmuffe 5 befestigt werden. Insbesondere wird die Dämpfungsmuffe (5) in die Gegenstände 6 hineingedrückt, so daß sie durch Reibung in einer gegenüber der Muffe 5 stabilen Position gehalten werden. Die Befestigungsfläche 7 kann z.B. die Oberfläche einer Fahrzeugkarosserie sein.

Die Dämpfungsmuffe 5 weist eine mittige Bohrung 8 zur Aufnahme des Bolzens 1 auf. In vormontiertem Zustand, der in Fig. 1 dargestellt ist, befindet sich der untere Bolzenabschnitt 3 mit Gewinde in der Bohrung 8. In montiertem Zustand befindet sich der obere Bolzenabschnitt 2 in der Bohrung 8. Die Dämpfungsmuffe 5 wird in der montierten Position der Befestigungsschraube zwischen dem Kopf 4 und der Befestigungsfläche 7 axial, d.h. in Richtung der Verschraubung in das Gewindeloch 14 der Befestigungsfläche 7 zusammengedrückt.

Bei Befestigungsschrauben nach dem Stand der Technik ist der Durchmesser des oberen Bolzenabschnitts 2 kleiner als der Nenndurchmesser des Gewindes, d.h. der "Außendurchmesser" des unteren Bolzenabschnittes 3. Gleichzeitig weist die Dämpfungsmuffe 5 eine Engstelle auf, durch die der obere Bolzenabschnitt 2 gesteckt wird, so daß der Bolzen 1 und die Dämpfungsmuffe 5 in einem vormontierten Zustand eine unverlierbare Einheit bilden. Der Bolzen 1 und die Muffe 5 bleiben aber insoweit beweglich zueinander, als beim Stand der Technik der obere Bolzenabschnitt 2 in der Engstelle der Muffe 5 frei beweglich bleibt. Das bedeutet, daß der Bolzen 1 beim Verschraubungsvorgang über die Dämpfungsmuffe 5 in Richtung auf die Befestigungsfläche 7 hinausrutschen kann, so daß das Gewinde über den unteren Dämpfungsmuffenabschnitt hinausragt. Dadurch kann es beim Einbau von Elementen, die durch die Befestigungsschraube gehalten werden sollen, zu Beschädigungen kommen. Insbesondere können die herausstehenden unteren Bolzenabschnitte 3 bei Querbewegungen Kratzspuren auf der Befestigungsfläche 7 hinterlassen.

Daher wird der Bolzen 1 in dem vormontierten Zustand der Befestigungsschraube in einer Position gehalten, in der der untere Bolzenabschnitt 3 ganz von der Dämpfungsmuffe 5 bedeckt wird. Nur durch Druck auf den Bolzen 1 in Richtung auf die Befestigungsfläche 7 wird der untere Bolzenabschnitt 3 aus der Muffe 5 herausgedrückt und kann dann in der Befestigungsfläche 7 verschraubt werden. Aber noch kurz vor der Verschraubung der Befestigungsschraube ist somit sichergestellt, daß es nicht zu einem unbeabsichtigten Herausrutschen des Bolzens kommt.

Bei dem Bolzen 1 der Befestigungsschraube kann das Gewinde des unteren Bolzenabschnitts 3 einen Nenndurchmesser haben, der größer als der Durchmesser des oberen Bolzenabschnitts 2 ohne Gewinde ist. Eine solche Ausführungsform der Befestigungsschraube ist in Fig. 1 dargestellt. Bei dieser Ausführungsform umfaßt der Bolzen 1 einen Kragen 9 in dem oberen Bolzenabschnitt 2. Der Durchmesser des Kragens 9 ist größer als der Durchmesser des oberen Bolzenabschnitts 2. Der Kragen 9 ist vorzugsweise beabstandet von dem unteren Bolzenabschnitt 3 angeordnet, so daß sich zwischen dem Kragen 9 und dem unteren Bolzenabschnitt 3 ein Bereich befindet, der lokal den kleinsten Durchmesser aufweist. Damit eine Arretierung des Bolzens 1 in Bezug auf die Muffe 5 in der vormontierten Position erfolgt, so daß der untere Bolzenabschnitt 3 innerhalb der Muffe 5 verbleibt, greift in diesen Bereich mit minimalem Durchmesser ein oberer Dämpfungsmuffenabschnitt 10 ein. Der Durchmesser des Kragens 9 ist größer als der Durchmesser der Bohrung des oberen Dämpfungsmuffenabschnitts 10, so daß er nur mit einer gewissen Kraft durch die Bohrung 8 in dem oberen Dämpfungsabschnitt 10 gedrückt werden kann. Gleichzeitig ist der Durchmesser des Kragens 9 kleiner als der Durchmesser der Bohrung eines unteren Dämpfungsmuffenabschnitts 11, so daß sich der Kragen 9 einmal durch die Bohrung 8 in dem oberen Dämpfungsmuffenabschnitt 10 gedrückt in dem unteren Dämpfungsmuffenabschnitt 11 mehr oder weniger frei bewegen kann.

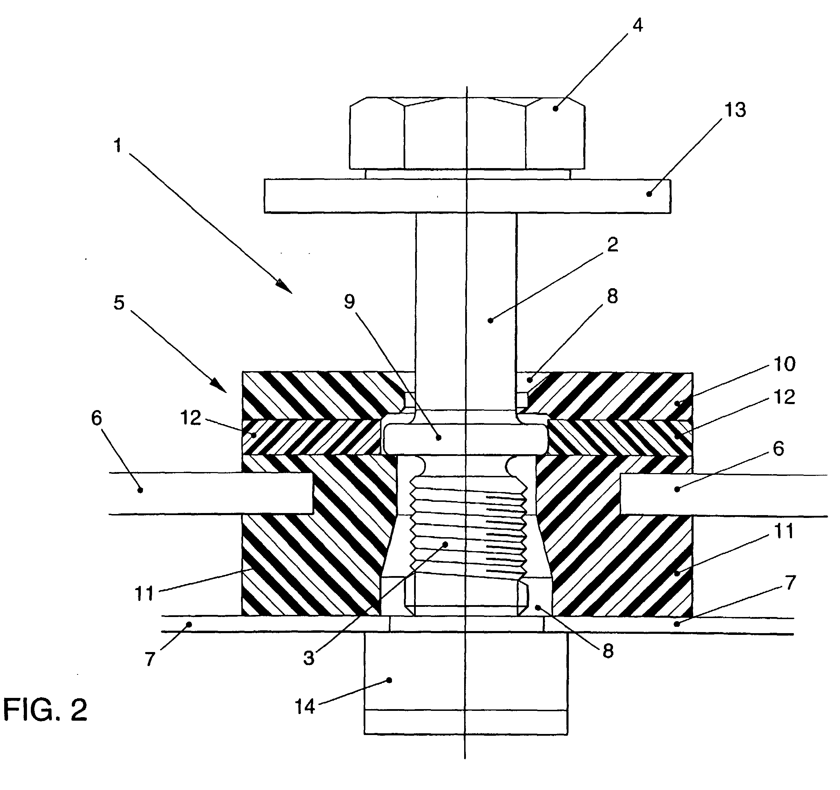

Eine weitere Ausführungsform der erfindungsgemäßen Befestigungsschraube ist in Fig. 2 dargestellt. Bei dieser Ausführungsform hat der Bolzen 1 der Befestigungsschraube ein Gewinde in dem unteren Bolzenabschnitt 3 dessen Nenndurchmesser nicht größer als der Durchmesser des oberen Bolzenabschnitts 2 ist. Vorrichtungen in Fig. 2, die mit denen in Fig. 1 übereinstimmen, sind mit denselben Bezugszeichen versehen.

Damit der Kragen 9 auch in diesem Fall arretiert werden kann, so daß der Bolzen 1 nicht vor der Montage bereits durch die Muffe 5 hindurchrutscht, ist der Durchmesser des Kragens 9 wenigstens etwas größer als der Durchmesser wenigstens eines Teils der Bohrung 8 eines unteren Dämpfungsmuffenabschnitts 11. Dies ist in Fig. 2 dargestellt, indem die Bohrung 8 in dem unteren Dämpfungsmuffenabschnitt 11 nach oben konisch zulaufend gezeigt ist. In dem oberen Bereich des unteren Dämpfungsmuffenabschnitts 11 ist der Durchmesser des Kragens 9 größer als die Bohrung 8, in dem unteren Bereich der Bohrung 8 ist der Durchmesser des Kragens 9 dagegen kleiner als die Bohrung, so daß der Bolzen 1 sich frei bewegen läßt, wenn sich der Kragen 9 in dem unteren Bereich des unteren Dämpfungsmuffenabschnitts 11 befindet.

Damit der Bolzen 1 auch in Richtung seines Kopfes 4 nicht aus der Dämpfungsmuffe 5 herausrutschen kann (das Gewinde hält ihn bei dieser Ausführungsform wegen des geringeren Nenndurchmessers nicht zurück!), ist der Durchmesser des Kragens 9 außerdem auch größer als der Durchmesser einer Bohrung eines oberen Dämpfungsmuffenabschnitts 10. Die Dicke des oberen Dämpfungsmuffenabschnitts 10 ist dadurch vorgegeben, daß eine bestimmte Stabilität erreicht wird und der Bolzen 1 nur mit einer bestimmten Kraft aus der Dämpfungsmuffe 5 herausgezogen werden kann.

Zwischen dem oberen Dämpfungsmuffenabschnitt 10 und dem unteren Dämpfungsmuffenabschnitt 11 befindet sich ein mittlerer Dämpfungsmuffenabschnitt 12. Der mittlere Dämpfungsmuffenabschnitt 12 weist eine Innenbohrung 8 auf, deren Durchmesser im wesentlichen ebenso groß wie der Durchmesser des Kragens 9 ist. Die Höhe des mittleren Dämpfungsmuffenabschnitts 12 ist dabei so gewählt, daß sie im wesentlichen der Dicke des Kragens 9 entspricht und der Bolzen 1 sich in vertikaler Richtung nur im Rahmen des Spiels bewegen kann, das durch die Höhe des mittleren Dämpfungsmuffenabschnitts 12 gegeben ist.

Um die erforderliche Länge des Bolzens 1 so gering wie möglich halten zu können, ist der Kragen 9 bei dieser Ausführungsform am Übergang zwischen dem oberen Bolzenabschnitt 2 und dem unteren Bolzenabschnitt 3 angeordnet.

Während bei der Ausführungsform nach Fig. 1 die Dämpfungsmuffe 5 einfacher und damit kostengünstiger aufgebaut ist, der Bolzen 1 dafür aber etwas aufwendiger ist, hat bei der Ausführungsform nach der Fig. 2 der Bolzen 1 bis auf den Kragen 9 einen durchgehend gleichen äußeren Durchmesser und ist daher einfacher herzustellen. Die Muffe 5 umfaßt in der Ausführungsform nach Fig. 2 dafür drei Abschnitte mit unterschiedlichem Bohrungsdurchmesser 8 statt nur zwei wie in Fig. 1.

Bei der Ausführungsform nach Fig. 1 und Fig. 2 kann die Dämpfungsmuffe 5 aus den mehreren gezeigten Dämpfungsmuffenabschnitten zusammengesetzt sein. In Fig. 1 sind dies die beiden Dämpfungsmuffenabschnitte 10 und 11, in Fig. 2 sind dies die drei Dämpfungsmuffenabschnitte 10, 11 und 12. Die Dämpfungsmuffenabschnitte werden dabei derart zusammengesetzt, daß ihre Bohrungen konzentrisch übereinander liegen. Bei Fig. 2 bedeutet dies, daß sich die kleine Bohrung des Dämpfungsmuffenabschnitts 10 über der großen Bohrung des mittleren Dämpfungsmuffenabschnitts 12 befindet, die sich wiederum über der kleinen Bohrung des unteren Dämpfungsmuffenabschnitts 11 befindet. Die Dämpfungsmuffenabschnitte 10, 11, 12 können dabei miteinander verklebt oder vulkanisiert sein.

Grundsätzlich ist es jedoch auch möglich, die Dämpfungsmuffe 5 in einem Stück herzustellen.

Damit die Dämpfungsmuffe 5 in montiertem Zustand nicht unsymmetrisch zusammengepreßt wird, umfaßt der Kopf 4 des Bolzens 1 vorzugsweise eine Unterlegscheibe 13. Der Außendurchmesser der Unterlegscheibe 13 ist insbesondere ebenso groß wie die Dämpfungsmuffe 5. Bei ausreichend steifem Material, aus dem die Dämfpungsmuffe 5 hergestellt ist, genügt aber bereits eine kleinere Unterlegscheibe 13, um ein unsymmetrisches Zusammenpressen der Muffe 5 zu verhindern.

Um die Stabilität der Muffe 5 gegenüber dem unsymmetrischen Zusammenpressen noch weiter zu erhöhen, kann in einer weiteren (nicht dargestellten) Ausführungsform in dem unteren Dämpfungsmuffenabschnitt 11 eine Hülse angeordnet sein, deren Innendurchmesser größer als der Nenndurchmesser des Gewindes ist.

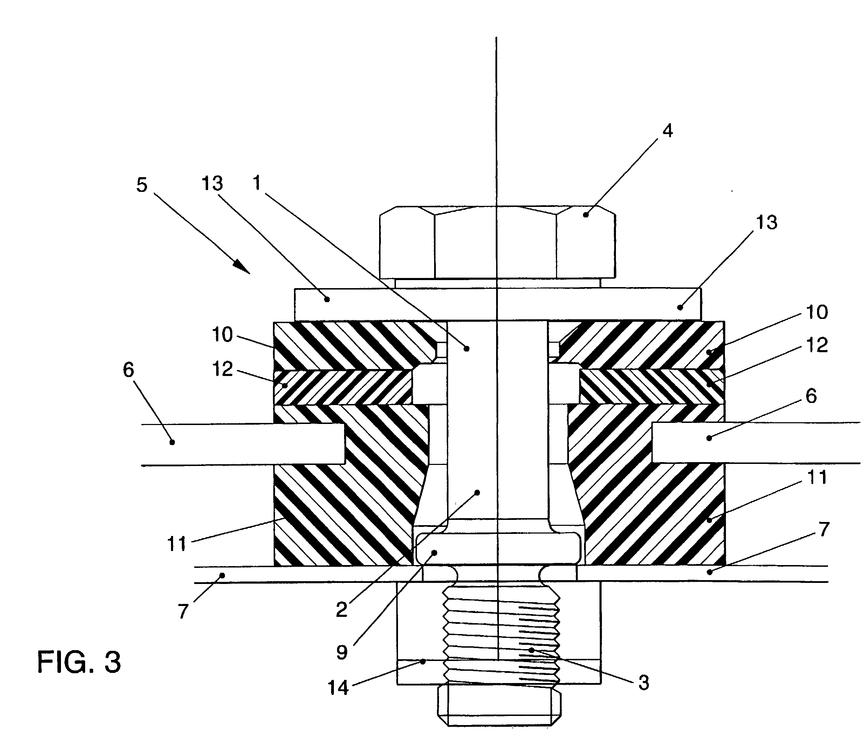

In Fig. 3 ist die Befestigungsschraube nach Fig. 2 in montiertem Zustand gezeigt. Das Gewinde auf dem unteren Bolzenabschnitt 3 ist in das Gewindeloch 14 eingeschraubt, der Kragen befindet sich in etwa in Höhe der Befestigungsfläche 7. Somit kann der erfindungsgemäße Kragen 9 gleichzeitig als Stopper dienen, der ein zu tiefes Einschrauben der Befestigungsschraube in das Gewindeloch 14 in der Befestigungsfläche 7 verhindert.

### BEZUGSZEICHENLISTE

- 1: Bolzen
- 2: oberer Bolzenabschnitt
- 3: unterer Bolzenabschnitt
- 4: Kopf
- 5: Dämpfungsmuffe
- 6: Gegenstand, der zu befestigen ist
- 7: Befestigungsfläche
- 8: Bohrung
- 9: Kragen
- 10: oberer Dämpfungsmuffenabschnitt
- 11: unterer Dämpfungsmuffenabschnitt
- 12: mittlerer Dämpfungsmuffenabschnitt
- 13: Unterlegscheibe
- 14: Gewindeloch in Befestigungsfläche

## Patentansprüche

1. Befestigungsschraube
mit einem Bolzen (1), der einen oberen Bolzenabschnitt (2) ohne Gewinde und einen unteren Bolzenabschnitt (3) mit Gewinde aufweist,
einem Kopf (4), der den oberen Bolzenabschnitt (2) abschließt und dessen Durchmesser größer als der Durchmesser des oberen Bolzenabschnitts (2) ist,
einer Dämpfungsmuffe (5) aus elastisch deformierbarem Material zur Aufnahme eines elastisch zu befestigenden Gegenstandes (6) an einer Befestigungsfläche (7), welche Dämpfungsmuffe eine mittige Bohrung (8) zur Aufnahme des Bolzens (1) aufweist,
wobei der Bolzen (1) und die Dämpfungsmuffe (5) in einem vormontierten Zustand miteinander unverlierbar die Befestigungsschraube bilden und der Bolzen (1) dabei in einer Position gehalten ist, in der der untere Bolzenabschnitt (3) ganz von der Dämpfungsmuffe (5) bedeckt wird, und wobei die Dämpfungsmuffe (5) im montierten Zustand der Befestigungsschraube zwischen dem Kopf (4) und der Befestigungsfläche (7) axial zusammengedrückt ist,
wobei zwischen den Bolzenabschnitten (2, 3) ein Kragen (9) ausgebildet ist, der einen größeren Durchmesser als dieser (2) aufweist, **dadurch gekennzeichnet,**
**dass** die Dämpfungsmuffe (5) kopfseitig mit einem Bohrungsbereich mit einem kleineren Durchmesser als der Durchmesser des Kragens (9) versehen ist,
und **dass** die Dämpfungsmuffe (5) entweder auf der dem Kopf (4) abgewandten Seite dieses Bohrungsbereiches mit dem kleineren Durchmesser einen Bohrungsbereich größeren Durchmessers zur Aufnahme des Kragens (9) für den vormontierten Zustand aufweist, oder,
**dass** zwischen dem Kragen (9) und dem unteren Bolzenabschnitt (3) ein Bolzenbereich mit einem kleineren Durchmesser als der des unteren Bolzenabschnitts (3) zur Aufnahme des kopfseitigen Bohrungsbereiches der Dämpfungsmuffe (5) mit dem kleineren Durchmesser für den vormontierten Zustand ausgebildet ist.

2. Befestigungsschraube nach Anspruch 1, **dadurch gekennzeichnet, dass** die Dämpfungsmuffe (5) zur Aufnahme des Kragens (9) aus einem oberen Dämpfungsmuffenabschnitt (10), einem unteren Dämpfungsmuffenabschnitt (11) und einem mittleren Dämpfungsmuffenabschnitt (12) mit konzentrisch übereinander angeordneten Bohrungen zusammengesetzt ist, wobei der Durchmesser des Kragens (9) größer als der Durchmesser der Bohrung des oberen und des unteren Dämpfungsmuffenabschnittes (10, 11) und im wesentlichen gleich dem Durchmesser des mittleren Dämpfungsmuffenabschnittes (12) ist.

3. Befestigungsschraube nach Anspruch 1, **dadurch gekennzeichnet, dass** die Dämpfungsmuffe (5) zur Anordnung am Bolzen (1) aus einem oberen Dämpfungsmuffenabschnitt (10) und einem unteren Dämpfungsmuffenabschnitt (11) mit konzentrisch übereinander angeordneten Bohrungen zusammengesetzt ist, wobei der Durchmesser der Bohrung des oberen Dämpfungsmuffenabschnittes (10) kleiner als der Durchmesser der Bohrung des unteren Dämpfungsmuffenabschnittes (11) ist und in den Bolzenbereich mit dem kleineren Durchmesser eingreift.

4. Befestigungsschraube nach Anspruch 2 oder 3, **dadurch gekennzeichnet, dass** die Dämpfungsmuffenabschnitte (10, 11 bzw. 10, 11, 12) miteinander verklebt oder vulkanisiert sind.

5. Befestigungsschraube nach Anspruch 1, **dadurch gekennzeichnet, dass** der Kopf (4) eine Unterlegscheibe (13) umfaßt.

6. Befestigungsschraube nach einem der Ansprüche 2 bis 4, **dadurch gekennzeichnet, dass** in dem unteren Dämpfungsmuffenabschnitt (11) eine Hülse angeordnet ist, deren Innendurchmesser größer als der Nenndurchmesser des Gewindes ist.

## Claims

1. Securing screw, having a bolt (1) which has an upper bolt section (2) without a thread, and a lower bolt section (3) with a thread, a head (4) which forms the end of the upper bolt section (2) and whose diameter is larger than the diameter of the upper bolt section (2), a damping sleeve (5) made of elastically deformable material for receiving an object (6), to be secured elastically, on a securing face (7), which damping sleeve has a central bore (8) for receiving the bolt (1),
wherein the bolt (1) and the damping sleeve (5) form the attachment screw in a captive fashion in a state in which they are preassembled with one another, and the bolt (1) is held in this state in a position in which the lower bolt section (3) is covered entirely by the damping sleeve (5), and wherein the damping sleeve (5) is compressed axially between the head (4) and the securing face (7) in the mounted state of the securing screw, wherein a collar (9) is formed between the bolt sections (2, 3) and has a larger diameter than said bolt section (2), **characterized in that** the damping sleeve (5) is provided at the head end with a bore area with a smaller diameter than the diameter of the collar (9), and **in that** either the damping sleeve (5) has, on the side of this bore area with the smaller diameter facing away from the head (4), a bore area with a larger diameter for receiving the collar (9) for the preassembled state, or **in that** between the collar (9) and the lower bolt section (3) a bolt area with a smaller diameter than that of the lower bolt section (3) is formed for receiving the head-end bore area of the damping sleeve (5) with the smaller diameter, for the assembled state.

2. Securing screw according to Claim 1, **characterized in that** the damping sleeve (5) for receiving the collar (9) is composed of an upper damping sleeve section (10), a lower damping sleeve section (11) and a central damping sleeve section (12) with bores which are arranged concentrically one on top of the other, wherein the diameter of the collar (9) is larger than the diameter of the bore in the upper damping sleeve section (10) and the bore in the lower damping sleeve section (11) and is essentially the same as the diameter of the central damping sleeve section (12).

3. Securing screw according to Claim 1, **characterized in that** the damping sleeve (5) for arrangement on the bolt (1) is composed of an upper damping sleeve section (10) and a lower damping sleeve section (11) with bores which are arranged concentrically one on top of the other, wherein the diameter of the bore of the upper damping sleeve section (10) is smaller than the diameter of the bore of the lower damping sleeve section (11) and engages in the bolt area with the smaller diameter.

4. Securing screw according to Claim 2 or 3, **characterized in that** the damping sleeve sections (10, 11 and 10, 11, 12) are bonded or vulcanized to one another.

5. Securing screw according to Claim 1, **characterized in that** the head (4) comprises a washer (13).

6. Securing screw according to one of Claims 2 to 4, **characterized in that** a sleeve whose internal diameter is larger than the standard diameter of the thread is arranged in the lower damping sleeve section (11).

## Revendications

1. Vis de fixation comprenant un boulon (1) qui présente
une portion de boulon supérieure (2) sans filetage et une portion de boulon inférieure (3) avec filetage,
une tête (4) qui termine la portion de boulon supérieure (2) et dont le diamètre est supérieur au diamètre de la portion de boulon supérieure (2),
un manchon d'amortissement (5) en matériau déformable élastiquement destiné à recevoir un objet (6) devant être fixé élastiquement sur une surface de fixation (7), lequel manchon d'amortissement présente un alésage central (8) pour recevoir le boulon (1),
le boulon (1) et le manchon d'amortissement (5) formant ensemble, dans un état prémonté, de manière imperdable, la vis de fixation, et le boulon (1) étant maintenu dans une position dans laquelle la portion de boulon inférieure (3) est complètement recouverte par le manchon d'amortissement (5), et le manchon d'amortissement (5) étant comprimé axialement dans l'état monté de la vis de fixation entre la tête (4) et la surface de fixation (7), un rebord (9) étant réalisé entre les portions de boulon (2, 3), lequel présente un diamètre plus grand que celle-ci (2), **caractérisé en ce que** le manchon d'amortissement (5) est pourvu du côté de la tête d'une zone d'alésage de diamètre inférieur au diamètre du rebord (9), et **en ce que** le manchon d'amortissement (5) présente, soit du côté de cette zone d'alésage opposé à la tête (4) ayant le plus petit diamètre, une zone d'alésage de plus grand diamètre pour recevoir le rebord (9) pour l'état prémonté, soit **en ce qu'**entre le rebord (9) et la portion de boulon inférieure (3) est réalisée une zone de boulon ayant un diamètre plus petit que celui de la portion de boulon inférieure (3) pour recevoir la zone d'alésage du côté de la tête du manchon d'amortissement (5) ayant le plus petit diamètre pour l'état prémonté.

2. Vis de fixation selon la revendication 1,
**caractérisée en ce que**
le manchon d'amortissement (5) pour recevoir le rebord (9) se compose d'une portion de manchon d'amortissement supérieure (10), d'une portion de manchon d'amortissement inférieure (11) et d'une portion de manchon d'amortissement centrale (12) avec des alésages disposés concentriquement les uns au-dessus des autres, le diamètre du rebord (9) étant supérieur au diamètre de l'alésage de la portion de manchon d'amortissement supérieure et inférieure (10, 11) et étant essentiellement égal au diamètre de la portion de manchon d'amortissement centrale (12).

3. Vis de fixation selon la revendication 1, **caractérisée en ce que** le manchon d'amortissement (5) pour l'agencement sur le boulon (1) est constitué d'une portion de manchon d'amortissement supérieure (10) et d'une portion de manchon d'amortissement inférieure (11) avec des alésages disposés concentriquement les uns au-dessus des autres, le diamètre de l'alésage de la portion de manchon d'amortissement supérieure (10) étant inférieur au diamètre de l'alésage de la portion de manchon d'amortissement inférieure (11) et venant en prise dans la région du boulon avec le plus petit diamètre.

4. Vis de fixation selon la revendication 2 ou 3, **caractérisée en ce que** les portions de manchon d'amortissement (10, 11, respectivement 10, 11, 12) sont collées ou vulcanisées ensemble.

5. Vis de fixation selon la revendication 1, **caractérisée en ce que** la tête (4) comprend une rondelle (13).

6. Vis de fixation selon l'une quelconque des revendications 2 à 4, **caractérisée en ce que** l'on prévoit dans la portion de manchon d'amortissement inférieure (11) une douille dont le diamètre intérieur est supérieur au diamètre nominal du filetage.
